# EUROPÄISCHE PATENTSCHRIFT

(11) **EP 3 524 449 B1**
(45) Veröffentlichungstag und Bekanntmachung des Hinweises auf die Patenterteilung: **31.03.2021**
(21) Anmeldenummer: 18155672.1
(22) Anmeldetag: 08.02.2018
(51) Int. Cl.: B60G 7/00

(54) **FAHRWERKSTEIL EINES KRAFTFAHRZEUGS SOWIE VERFAHREN ZUR HERSTELLUNG EINES FAHRWERKSTEILS**
SUSPENSION PART OF A MOTOR VEHICLE AND METHOD FOR PRODUCING A SUSPENSION PART
PARTIE DE SUSPENSION D'UN VÉHICULE AUTOMOBILE AINSI QUE PROCÉDÉ DE FABRICATION D'UNE PARTIE DE SUSPENSION

(43) Veröffentlichungstag der Anmeldung: 14.08.2019
(73) Patentinhaber: Autotech Engineering Deutschland GmbH, 33647 Bielefeld (DE); Autotech Engineering S.L., 48340 Amorebieta-Etxano (ES); Gestamp Tallent Ltd, CO Durham DL5 6EP (GB)
(72) Erfinder: Bone, Gareth, Langley Moor, Durham DH7 8LW (GB); Pummell, Freddie, Stocksfield, Northumberland NE43 7PQ (GB)
(74) Vertreter: Cohausz & Florack

(56) Entgegenhaltungen:
- EP-A2- 0 851 131
- WO-A1-2008/028647
- WO-A2-2014/195484
- DE-A1-102007 015 616
- DE-A1-102011 086 890
- DE-A1-102012 207 487
- DE-A1-102013 222 775
- DE-A1-102015 209 001
- US-A- 4 772 044

## Beschreibung

Die Erfindung betrifft ein Fahrwerksteil eines Kraftfahrzeugs, insbesondere einen Radträger, umfassend einen faserverstärkten Kunststoffverbund mit einem metallischen Trägerelement, wobei das Trägerelement aus einem eine Vielzahl von Durchbrechungen aufweisenden Metallblech gebildet ist, gemäß dem Oberbegriff des Anspruchs 1. Des Weiteren betrifft die Erfindung ein Verfahren zur Herstellung eines solchen Fahrwerksteils, insbesondere eines Radträgers.

Der Einsatz von faserverstärkten Kunststoffverbunden in Fahrwerksteilen von Kraftfahrzeugen ist grundsätzlich bekannt. Dabei werden als Werkstoffe für die Fasern insbesondere Kohlenstofffasern genutzt, die beispielsweise unidirektional oder quasiisotrop in dem faserverstärkten Kunststoffverbund angeordnet sind. Eine unidirektionale Anordnung der Fasern bedeutet, dass alle Fasern einer Schicht des Kunststoffverbundes in eine einzige Richtung orientiert sind. Eine quasiisotrope Anordnung der Fasern bedeutet, dass die Fasern einer Schicht des Kunststoffverbundes in unterschiedliche Richtungen orientiert sind.

Radträger sind Fahrwerksteile, die denjenigen Teil der Radaufhängung eines Kraftfahrzeugs bilden, welcher einen Radzapfen oder ein Radlager und damit ein Rad des Kraftfahrzeugs aufnimmt. Üblicherweise weisen die Radträger zahlreiche Aufnahmen zur Verbindung des Radträgers mit anderen Bauteilen, wie beispielsweise einem Querlenker, einem Bremssattel oder einem Längslenker, auf.

Aus einem faserverstärkten Kunststoffverbund hergestellte Fahrwerksteile weisen im Vergleich zu den üblicherweise für Fahrwerksteile verwendeten metallischen Werkstoffen Vorteile hinsichtlich des Gewichts und gegebenenfalls auch hinsichtlich der Steifigkeit auf. Es hat sich allerdings gezeigt, dass Fahrwerksteile, welche aus einem faserverstärkten Kunststoffverbund ohne Trägerelement hergestellt sind, ungenügende Festigkeitseigenschaften für den bestimmungsgemäßen Gebrauch bestimmter Fahrwerksteile, wie beispielsweise Radträger, aufweisen können. Ein Fahrwerksteil aus einem faserverstärkten Kunststoffverbund neigt bei stoßartigen Belastungen, welche beispielsweise auftreten, wenn ein Kraftfahrzeug mit einem Rad in ein Schlagloch oder über einen Bordstein fährt, zu Sprödbruch. Durch eine solche stoßartige Belastung kann ein Fahrwerksteil derart beschädigt werden, dass es die Funktion des Fahrwerksteils nicht mehr erfüllen kann, was insbesondere bei sicherheitsrelevanten Fahrwerksteilen ein erhebliches Risiko für die Insassen des Kraftfahrzeugs mit sich bringt.

Aus der DE 10 2011 086 890 ist es bekannt, ein Bauelement im Fahrwerk eines Kraftfahrzeugs, insbesondere einen Radträger oder einen radführenden Lenker, vorzusehen, welches/welcher zumindest abschnittsweise aus einem faserverstärkten Kunststoffmaterial besteht, wobei neben Verstärkungsfasern aus Kohlenstoff und/oder Glasfasern zusätzlich dünne Stahldrähte, vorzugsweise in Form eines netzartigen Gewebes vorgesehen sind. Als Durchmesser für die Stahldrähte wird ein Wert in der Größenordnung von 250 µm bis 2 mm vorgeschlagen, wobei die Größenordnung der Maschenweite im Bereich von 0,05 bis 5 mm liegt. Durch die Stahldrähte soll sichergestellt werden, dass eine außergewöhnlich hohe stoßartige Belastung des Bauteils durch plastische Verformung desselben sichtbar wird, was bei entsprechenden Bauteilen aus faserverstärktem Kunststoff, die keine Stahldrähte aufweisen, nicht der Fall ist und bei einer weiteren hohen Belastung zu einem unkontrollierten Brechen des faserverstärkten Kunststoff-Bauteils führen kann. Nachteilig an einer solchen Ausgestaltung ist allerdings, dass sich die Belastungsfähigkeit eines solchen durch dünne Stahldrähte verstärkten Bauelements im Fahrwerk eines Kraftfahrzeugs im Wesentlichen nicht von der Belastungsfähigkeit eines Bauelements aus einem faserverstärkten Kunststoffverbund ohne Stahldrahteinlage unterscheidet.

Die DE 10 2015 209 001 A1 offenbart eine Radaufhängungseinheit, die einen Längslenker und einen einstückig mit dem Längslenker ausgebildeten Radträger umfasst, wobei die Radaufhängungseinheit zumindest teilweise aus faserverstärktem Kunststoff besteht. Zur Verstärkung der Radaufhängungseinheit können Komponenten anderer Materialien in dem faserverstärkten Kunststoff eingelagert sein. Die Komponente kann beispielsweise als Lagerhülse aus Metall oder als Lagerbuchse aus Gummi ausgebildet sein. In einem Ausführungsbeispiel dieser Radäufhängungseinheit sind im Bereich des Längslenkers Einsätze aus Stahl in die Kunststoffmatrix eingelagert. Des Weiteren ist in der DE 10 2015 209 001 A1 angegeben, dass mehrere unterschiedliche Kunststoffe und/oder unterschiedliche Fasern verwendet werden können. Als Fasertypen sind Endlosfasern, kurze Fasern zwischen 0,5 und 1 mm Länge sowie längere Fasern mit einer Länge zwischen 1 und 50 mm genannt, wobei solche kurzen und längeren Fasern gegenüber Endlosfasern als vorteilhaft bezeichnet werden, da Endlosfasern nicht im Sprühverfahren appliziert werden können.

Davon ausgehend lag der vorliegenden Erfindung die Aufgabe zugrunde, ein Fahrwerksteil der eingangs genannten Art zu schaffen, welches eine hohe Bauteilfestigkeit aufweist und sich bei Einsparung von Materialgewicht kostengünstig herstellen lässt.

Gelöst wird diese Aufgabe durch ein Fahrwerksteil mit den in Anspruch 1 angegebenen Merkmalen. Bevorzugte und vorteilhafte Ausgestaltungen des erfindungsgemäßen Fahrwerksteils sind in den Unteransprüchen angegeben.

Das erfindungsgemäße Fahrwerksteil, das einen faserverstärkten Kunststoffverbund mit einem metallischen Trägerelement umfasst, wobei das Trägerelement aus einem eine Vielzahl von Durchbrechungen aufweisenden Metallblech gebildet ist, ist dadurch gekennzeichnet, dass sich der faserverstärkte Kunststoffverbund aus zumindest zwei unterschiedlichen Komponenten zusammensetzt, wobei eine erste Komponente des Kunststoffverbundes an einer ersten Seite des Trägerelements angeordnet ist und wobei eine zweite Komponente des Kunststoffverbundes an einer der ersten Seite gegenüberliegenden Seite des Trägerelements angeordnet ist, wobei die erste Komponente aus faserverstärktem Kunststoff mit Endlosfasern ausgebildet ist, wobei die Länge der Endlosfasern über einer Mindestlänge von 50 mm liegt, wobei die zweite Komponente aus faserverstärktem Kunststoff mit diskontinuierlichen Fasern ausgebildet ist, wobei die Länge der diskontinuierlichen Fasern geringer ist als die Länge der Endlosfasern, wobei das Trägerelement aus einem umgeformten Metallblech gebildet ist, wobei die erste Seite des Trägerelements im Wesentlichen zweidimensional ausgebildet ist und wobei die der ersten Seite gegenüberliegende Seite des Trägerelements eine dreidimensionale Struktur aufweist, und wobei das Trägerelement einen durch die Durchbrechungen gebildeten Lochflächenanteil aufweist, der 60 bis 90% der Grundfläche des Trägerelements beträgt.
Erfindungsgemäß wurde erkannt, dass Endlosfasern richtungsabhängig hohe Steifigkeits- und Festigkeitswerte aufweisen. Dementsprechend kann die erste Komponente, welche aus faserverstärktem Kunststoff mit Endlosfasern gebildet ist, hohe Kräfte in Richtung der Endlosfasern aufnehmen. Diskontinuierliche Fasern können keine derart hohen richtungsabhängigen Kräfte aufnehmen, allerdings ist die multidirektionale Kraftaufnahme der diskontinuierlichen Faser größer, insbesondere bei einer zufälligen Ausrichtung der diskontinuierlichen Fasern. Die Bezeichnung Endlosfaser bedeutet nicht, dass die derart bezeichneten Fasern eine endlose Länge aufweisen, sondern vielmehr, dass die Länge der derart bezeichneten Fasern über einer bestimmten Mindestlänge liegt. Erfindungsgemäß liegt diese Mindestlänge bei 50 mm. Die Länge der diskontinuierlichen Fasern ist geringer als die Länge der in dem Kunststoffverbund des Fahrwerksteils verwendeten Endlosfasern.

Es versteht sich, dass die Erfindung nicht auf Radträger beschränkt ist, sondern sich vielmehr bei Fahrwerksteilen jeglicher Art anwenden lässt.

Bei der ersten Seite des Trägerelements handelt es sich beispielsweise um die Unterseite oder Außenseite des Trägerelements. Die erste Seite des Trägerelements wird hier als diejenige Seite des Trägerelements verstanden, welche im montierten Zustand bzw. bestimmungsgemäßen Einsatz des Fahrwerksteils nach unten oder außen gewandt ist. Bei der der ersten Seite gegenüberliegenden Seite des Trägerelements handelt es sich dann um die Oberseite oder Innenseite des Fahrwerksteils. Es wurde erkannt, dass insbesondere an der Unterseite bzw. Außenseite von Fahrwerksteilen richtungsabhängige Kräfte auftreten, die bei dem erfindungsgemäßen Fahrwerksteil bevorzugt von Endlosfasern des faserverstärkten Kunststoffverbundes aufgenommen werden können. Im Gegensatz dazu treten an der Oberseite oder Innenseite von Fahrwerksteilen häufig oder mehr richtungsunabhängige Kräfte auf, die bei dem erfindungsgemäßen Fahrwerksteil bevorzugt von unidirektionaler Fasern des faserverstärkten Kunststoffverbundes aufgenommen werden können.

Durch die erfindungsgemäße Ausgestaltung eines Fahrwerksteils kann somit eine für die bestimmungsgemäße Nutzung ausreichende Festigkeit des Bauteils zur Verfügung gestellt werden, wobei durch das Vorsehen von zwei Komponenten aus faserverstärktem Kunststoff Materialgewicht eingespart wird. Durch die hybride Zusammensetzung des Fahrwerksteils lassen sich zudem Material- sowie Produktionskosten sparen.

Die Form des Fahrwerksteils korrespondiert bevorzugt zumindest teilweise im Wesentlichen zu der Form des umgeformten Metallblechs, so dass die bevorzugt an der Unterseite oder Außenseite des Trägerelements (Metallblechs) angeordnete erste Komponente des faserverstärkten Kunststoffverbundes Kräfte in zweidimensionaler Richtung aufnimmt bzw. aufnehmen kann, insbesondere in Quer- und Längsrichtung des Trägerelements. Hierzu ist die erste Komponente des faserverstärkten Kunststoffverbundes aufgrund ihrer Endlosfasern besonders geeignet, so dass eine hohe Bauteilfestigkeit sowie -steifigkeit erreicht wird. Im Gegensatz dazu weist die Oberseite des Trägerelements eine dreidimensionale Struktur (Form) auf, die mittels der zweiten Komponente des faserverstärkten Kunststoffverbundes verstärkt beziehungsweise versteift wird. Dies wird insbesondere durch das Vorsehen der diskontinuierlichen Fasern in der zweiten Komponente gewährleistet, da hierdurch Kräfte in jede Bauteilrichtung aufgenommen werden können. Eine zweidimensionale Ausbildung der Unterseite oder Außenseite des Trägerelementes bedeutet nicht, dass die Unterseite oder Außenseite des Trägerelements ausschließlich in einer zweidimensionalen Ebene liegen darf. Vielmehr bedeutet die zweidimensionale Ausbildung der Unterseite oder Außenseite des Trägerelements, dass die Unterseite des Trägerelements keinen deutlichen Vorsprung aufweist, sondern im Wesentlichen glatt oder flach ist.

Die Grundfläche des Trägerelements ist bevorzugt durch die im Wesentlichen 2-dimensionale Oberfläche der Unterseite des Trägerelements ohne Durchbrechungen gebildet. Ein Lochflächenanteil in der oben genannten Größenordnung ermöglicht eine stabile Verbindung zwischen den beiden Schichten (Komponenten des faserverstärkten Kunststoffverbundes) sowie eine ausreichende Stabilisierung der beiden Schichten durch das Trägerelement. Ebenfalls kann durch den relativ hohen Lochflächenanteil ein Fahrwerksbauteil mit einem geringen Gewicht zur Verfügung gestellt werden, da das metallische Trägerelement eine höhere Dichte als die beiden Komponenten des faserverstärkten Kunststoffverbunds besitzt.

Weitere bevorzugte Ausführungsformen des erfindungsgemäßen Fahrwerksteils sind beispielsweise Querlenker, Dreieckslenker sowie Dreipunktlenker. Bei den verwendeten Fasern des faserverstärkten Kunststoffs handelt es sich bevorzugt um Kohlenstofffasern, auch Karbonfasern genannt. Eine einzelne Kohlenstofffaser hat in der Regel einen Durchmesser im Bereich von 5 bis 9 µm. Für die Endlosfasern werden bevorzugt 12K Fasern verwendet. Dies bedeutet, dass ca. 12.000 Fasern zu einem Einzelgarn zusammengefasst werden. Für die diskontinuierlichen Fasern werden bevorzugt 15K Fasern verwendet. Dies bedeutet, dass ca. 15.000 Fasern zu einem Multifilamentgarn zusammengefasst werden.

Eine bevorzugte Ausgestaltung der Erfindung ist dadurch gekennzeichnet, dass sich das Trägerelement und/oder die erste Komponente und/oder die zweite Komponente des faserverstärkten Kunststoffverbundes nicht über die gesamte Länge und/oder Breite des Fahrwerksteils erstreckt. Besonders vorteilhaft ist es, wenn nach einer bevorzugten Ausgestaltung der Erfindung die erste Komponente an der Unterseite oder Außenseite des Trägerelements angeordnet ist und sich über die gesamte Länge des Fahrwerksteils erstreckt. Die zweite Komponente ist in diesem Fall auf der Oberseite oder Innenseite des Trägerelements angeordnet, wobei sich das Trägerelement und die zweite Komponente nicht über die gesamte Länge des Fahrwerksteils erstrecken. Dies ist insbesondere vorteilhaft, da mittels der ersten Komponente größere Kräfte in im Wesentlichen zweidimensionaler Richtung aufgenommen werden können. Zudem weisen viele Fahrwerksteile Bereiche auf, welche keine derart großen Kräfte aufnehmen müssen, dass dort ein Trägerelement und/oder eine zweite Komponente eines faserverstärkten Kunststoffverbundes nötig wären, um diese Kräfte aufzunehmen.

Die zweite Komponente des faserverstärkten Kunststoffverbundes ist vorzugsweise oder insbesondere in denjenigen Bereichen des Fahrwerksteils angeordnet, welche eine dreidimensionale Struktur (Form) aufweisen. Die dreidimensionale Struktur (Form) kann dabei beispielsweise von einer Grundfläche vorstehende Stege oder gabelförmige Aufnahmen zur gelenkigen Anbindung des Fahrwerksteils aufweisen. Aufgrund der dreidimensionalen Struktur müssen Kräfte aufgenommen werden, die nicht nur in Längs- bzw. Querrichtung des Fahrwerksteils sondern im Wesentlichen orthogonal zu der Erstreckung, insbesondere der Längserstreckung des Fahrwerksteils wirken. Hierzu sind die diskontinuierlichen Fasern des faserverstärkten Kunststoffverbundes gut geeignet.

Eine weitere bevorzugte Ausgestaltung der Erfindung ist dadurch gekennzeichnet, dass die Endlosfasern als unidirektionale und kontinuierliche Endlosfasern ausgebildet sind, wobei die Endlosfasern bevorzugt in Längsrichtung des Fahrwerksteils verlaufen. Durch eine solche Ausgestaltung können die in Längsrichtung des Fahrwerksteils auftretenden Kräfte in zuverlässiger Weise von den Endlosfasern der ersten Komponente des faserverstärkten Kunststoffverbundes aufgenommen werden. Unter der Längsrichtung des Fahrwerksteils ist die Längserstreckung des betreffenden Kraftfahrzeugs oder die Längserstreckung des Fahrwerkteils zu verstehen. Bevorzugt weist die erste Komponente des Kunststoffverbundes eine Dicke im Bereich von 0,1 bis 0,3 mm, besonders bevorzugt im Bereich von 0,15 bis 0,25 mm, auf und setzt sich aus 9 bis 13 Schichten, bevorzugt aus 10 bis 12 Schichten, besonders bevorzugt aus 11 Schichten, unidirektionaler und kontinuierlicher Endlosfasern zusammen. Dabei können die Fasern von benachbarten Schichten in dieselbe Richtung oder in unterschiedliche Richtungen orientiert sein. Bevorzugt sind die Fasern von benachbarten Schichten in dieselbe Richtung orientiert. Nach einer weiteren bevorzugten Ausgestaltung sind die Fasern von benachbarten Schichten jeweils orthogonal zueinander ausgerichtet, wobei die Endlosfasern bevorzugt in Längs- und in Querrichtung des Fahrwerksteils verlaufen. Mittels einer solchen Ausgestaltung der ersten Komponente des faserverstärkten Kunststoffverbundes kann eine ausreichende Festigkeit zur Aufnahme der auf die erste Komponente wirkenden Kräfte bei Reduktion des Gewichts der ersten Komponente zur Verfügung gestellt werden.

Alternativ dazu ist eine weitere bevorzugte Ausgestaltung der Erfindung dadurch gekennzeichnet, dass die Endlosfasern als bidirektionale und kontinuierliche Endlosfasern ausgebildet sind, wobei die Endlosfasern vorzugsweise im Wesentlichen orthogonal zueinander ausgerichtet sind und bevorzugt in Längsrichtung und in Querrichtung des Fahrwerksteils verlaufen. Durch eine solche Ausgestaltung können die in Längsrichtung und in Querrichtung des Fahrwerksteils auftretenden Kräfte in zuverlässiger Weise von den Endlosfasern der ersten Komponente des faserverstärkten Kunststoffverbundes aufgenommen werden. Unter der Längsrichtung des Fahrwerksteils ist wiederum die Längsrichtung des Kraftfahrzeugs oder die Längserstreckung des Fahrwerkteils zu verstehen. Unter der Querrichtung des Fahrwerksteils ist dementsprechend die Querrichtung des Kraftfahrzeugs bzw. die Quererstreckung des Fahrwerksteils zu verstehen. Bevorzugt weist die erste Komponente des Kunststoffverbundes eine Dicke im Bereich von 0,2 bis 0,6 mm, besonders bevorzugt im Bereich von 0,3 bis 0,5 mm, auf und setzt sich aus 6 bis 10 Schichten, bevorzugt aus 7 bis 9 Schichten, besonders bevorzugt aus 8 Schichten, bidirektionaler und kontinuierlicher Endlosfasern zusammen. Dabei können die Fasern von benachbarten Schichten in dieselbe Richtung oder in unterschiedliche Richtungen orientiert sein. Mittels einer solchen Ausgestaltung der ersten Komponente des faserverstärkten Kunststoffverbundes kann eine ausreichende Festigkeit zur Aufnahme der auf die erste Komponente wirkenden Kräfte bei Reduktion des Gewichts der ersten Komponente zur Verfügung gestellt werden.

Hinsichtlich einer höheren Bauteilfestigkeit ist es ferner vorteilhaft, wenn die Endlosfasern gemäß einer weiteren bevorzugten Ausgestaltung der Erfindung einen Anteil von 43 bis 63 Vol.-%, bevorzugt von 48 bis 58 Vol.-%, der ersten Komponente des faserverstärkten Kunststoffverbundes ausmachen. Ein solcher Anteil an Endlosfasern ist ausreichend, um hohe Festigkeitswerte des Fahrwerksbauteils zur Verfügung zu stellen. Bei den übrigen Bestandteilen der ersten Komponente des faserverstärkten Kunststoffverbundes kann es sich beispielsweise um wärmehärtbare Kunstharze oder um thermoplastische Kunststoffe handeln.

Eine weitere vorteilhafte Ausgestaltung der Erfindung ist dadurch gekennzeichnet, dass die zweite Komponente des faserverstärkten Kunststoffverbundes isotrope Eigenschaften aufweist. Isotrope Eigenschaften bedeuten, dass die mechanischen Eigenschaften der diskontinuierlichen Fasern aufweisenden zweiten Komponente des Kunststoffverbundes nicht oder nur geringfügig von der Richtung der Krafteinwirkung abhängig sind. Die Ausrichtung der diskontinuierlichen Fasern ist bevorzugt zufällig und folgt keinem spezifischen Muster. Hierdurch weist die bevorzugt an der Oberseite des metallischen Trägerelements angeordnete zweite Komponente des faserverstärkten Kunststoffverbundes eine erhöhte Festigkeit unabhängig von der Richtung der einwirkenden Kraft auf. Dadurch wird eine Versteifung der insbesondere auf der Oberseite des metallischen Trägerelements angeordneten dreidimensionalen Struktur ermöglicht.

Nach einer weiteren bevorzugten Ausgestaltung der Erfindung machen die diskontinuierlichen Fasern einen Anteil von 30 bis 50 Vol.-%, bevorzugt von 35 bis 45 Vol.-%, der zweiten Komponente des faserverstärkten Kunststoffverbundes aus. Ein solcher Anteil an Endlosfasern ist ausreichend, um hohe Festigkeitswerte des Fahrwerksbauteils zur Verfügung zu stellen. Bei den übrigen Bestandteilen der zweiten Komponente kann es sich beispielsweise um wärmehärtbare Kunstharze oder um thermoplastische Kunststoffe handeln. Dabei weist die zweite Komponente des faserverstärkten Kunststoffverbundes bevorzugt eine Dicke im Bereich von 1 bis 10 mm auf.

Eine weitere bevorzugte Ausgestaltung der Erfindung ist dadurch gekennzeichnet, dass die erste Komponente und die zweite Komponente des faserverstärkten Kunststoffverbundes über die Durchbrechungen des Trägerelements (Metallblechs) stoffschlüssig miteinander verbunden sind, und dass der Kunststoffverbund formschlüssig mit dem Trägerelement verbunden ist. Dabei sind die Kontaktstellen der ersten und zweiten Komponente bevorzugt in den Durchbrechungen des Trägerelements angeordnet, wobei die beiden Komponenten bevorzugt durch die Kontaktstellen stoffschlüssig miteinander verbunden sind. Nach Aushärtung des Kunststoffverbundes ist das Trägerelement formschlüssig mit dem durch die erste Komponente und die zweite Komponente gebildeten Kunststoffverbund verbunden. Durch eine derartige Verbindung zwischen der ersten und der zweiten Komponente des Kunststoffverbundes und dem Trägerelement wird ein Delaminieren des Kunststoffverbundes von dem metallischen Trägerelement während des Aushärtevorgangs verhindert und somit die Festigkeit sowie die Steifigkeit des produzierten Fahrwerksteils erhöht.

Des Weiteren ist es bevorzugt, dass die erste Komponente und die zweite Komponente des faserverstärkten Kunststoffverbundes aus wärmehärtbarem Kunstharz, vorzugsweise aus Polyesterharz, Epoxidharz, Phenolharz, Polyurethanharz und/oder Methylmethacrylatharz, und/oder aus thermoplastischem Kunststoff, vorzugsweise aus Polyamid, Polyphenylensulfid, Polybutylenterephthalat, Polyethylenterephthalat und/oder Polyetheretherketon, gebildet sind, wobei die erste Komponente bevorzugt Epoxidharz aufweist und wobei die zweite Komponente bevorzugt Vinylesterharz aufweist. Durch das Vorsehen der zuvor genannten Materialien in der ersten sowie der zweiten Komponente können die mechanischen Eigenschaften des Fahrwerksbauteils unter Erzielung eines geringen Gewichts optimiert werden.

Eine weitere vorteilhafte Ausgestaltung der Erfindung sieht vor, dass das Trägerelement einen durch die Durchbrechungen gebildeten Lochflächenanteil aufweist, der 70 bis 80 % der Grundfläche des Trägerelements beträgt.

Des Weiteren ist es bevorzugt, dass die Durchbrechungen eine sechseckige oder kreisförmige Lochform aufweisen, und dass die Lochflächengröße der jeweiligen Durchbrechung in einem Bereich von 100 bis 250 mm², bevorzugt in einem Bereich von 150 bis 200 mm², besonders bevorzugt in einem Bereich von 170 bis 180 mm², liegt. Eine sechseckige Lochform ist besonders vorteilhaft für eine Gewichtsreduktion des Fahrwerksbauteils, wohingegen eine kreisförmige Lochform vorteilhafter für die produktionstechnische Herstellung des Fahrwerksbauteils ist. Bevorzugt beträgt die größte Weite bzw. der Durchmesser einer Durchbrechung ca. 15 mm.

Nach einer weiteren bevorzugten Ausgestaltung der Erfindung weist das Metallblech des Trägerelements eine Dicke im Bereich von 1 bis 4 mm, bevorzugt im Bereich von ca. 2 bis 3,5 mm, auf, wobei das Metallblech eine Streckgrenze in einem Bereich von ca. 100 bis 500 N/mm², bevorzugt in einem Bereich von 200 bis 400 N/mm², aufweist. Bei der Streckgrenze handelt es sich um einen Materialkennwert, weshalb sich der oben genannte Wertebereich der Streckgrenze auf die Streckgrenze des Materials des Metallblechs allgemein bezieht und nicht auf die Streckgrenze des Metallblechs mit Durchbrechungen.

Die oben genannte Aufgabe wird ebenfalls durch ein eingangs genanntes Verfahren zur Herstellung eines Fahrwerksteils, insbesondere eines Radträgers, gemäß einem der Vorrichtungsansprüche 1bis 13 gelöst, bei dem ein metallisches Trägerelement in einem Umformschritt umgeformt wird, bei dem das metallische Trägerelement vor oder nach dem Umformschritt in mindestens einem Stanzschritt mit einer Vielzahl von Durchbrechungen versehen wird, und bei dem eine erste Faserverbundwerkstoffkomponente mit einer zweiten Faserverbundwerkstoffkomponente in einem Fließpressschritt über die Durchbrechungen stoffschlüssig verbunden wird. Die Vorteile eines solchen Verfahrens ergeben sich aus den zuvor genannten Vorteilen hinsichtlich des Fahrwerksbauteils.

Nachfolgend wird die Erfindung anhand einer Ausführungsbeispiele darstellenden Zeichnung näher erläutert. Es zeigen:
- Fig. 1a: eine perspektivische Ansicht eines Fahrwerksteils aus faserverstärktem Verbundkunststoff;
- Fig. 1b: das in Fig. 1a gezeigte Ausführungsbeispiel des Fahrwerksteils, wobei ein in dem Fahrwerksteil integriertes metallisches Trägerelement in Form eines umgeformten, gelochten Metallblechs durch gestrichelte Linien angedeutet ist;
- Fig. 2: eine Explosionsdarstellung des in Fig. 1a dargestellten Fahrwerksteils;
- Fig. 3: eine perspektivische Ansicht eines in dem Fahrwerksteil gemäß Fig. 1a integrierten metallischen Trägerelements;
- Fig. 4a: eine schematische Schnittansicht eines Ausführungsbeispiels einer ersten Komponente des faserverstärkten Kunststoffverbundes; und
- Fig. 4b: eine schematische Schnittansicht eines Ausführungsbeispiels einer zweiten Komponente des faserverstärkten Kunststoffverbundes.

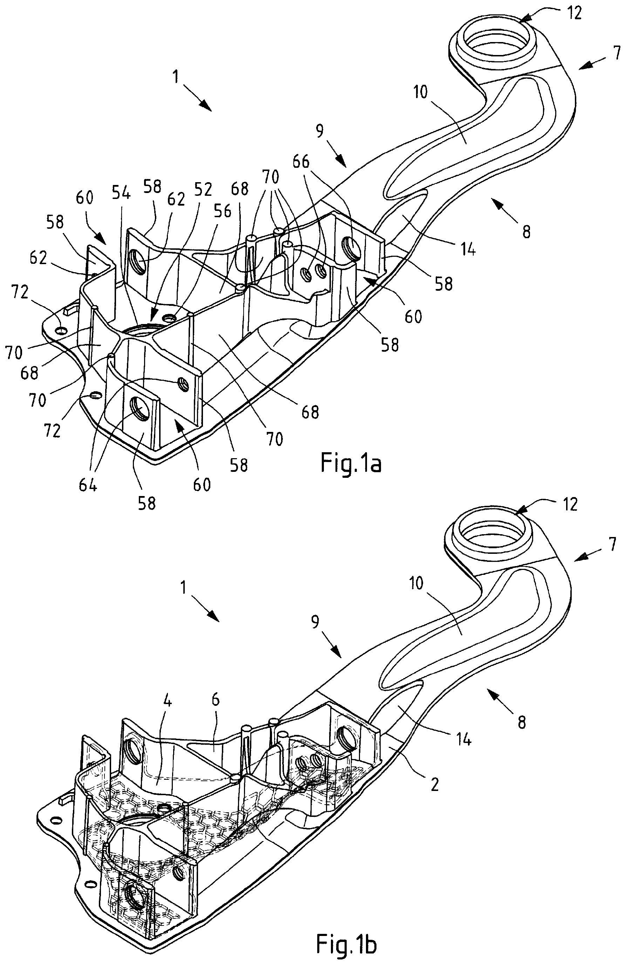

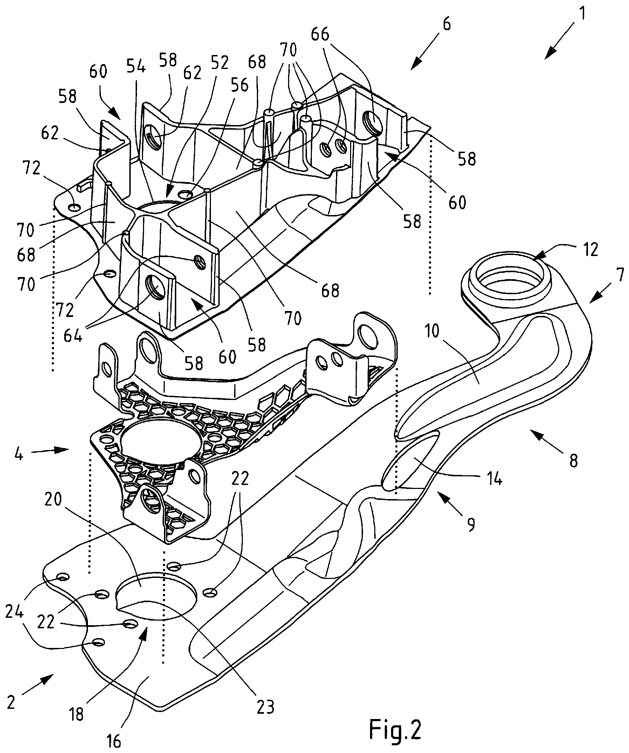

Fig. 1a zeigt ein Fahrwerksteil 1, welches in Form eines Radträgers ausgebildet ist. Das Fahrwerksteil 1 bzw. der Radträger kann beispielsweise für eine Hinterachse oder eine Vorderachse eines Kraftfahrzeuges vorgesehen werden und umfasst einen faserverstärkten Kunststoffverbund, der aus zumindest zwei unterschiedlichen Komponenten 2 und 6 zusammensetzt ist, wobei zwischen der ersten Komponente 2 und der zweiten Komponente 6 ein metallisches Trägerelement 4 integriert ist (siehe Fig. 1b und 2).

Das dreidimensionale Fahrwerksteil 1 wird vorzugsweise im Wesentlichen in einem einzelnen Prozessschritt mittels Fließpressen aus den beiden unterschiedlichen Kunststoffkomponenten 2 und 6, welche unterschiedliche Verstärkungsfasern aufweisen, und dem als Einlage dienenden metallischen Trägerelement 4 gefertigt. Hierzu wird vorzugsweise die erste faserverstärkte Kunststoffkomponente 2 in einem vorgeordneten Fertigungsschritt (Formungsschritt) vorgeformt und anschließend zusammen mit dem metallischen Trägerelement 4 und einem durch Fließpressen formbaren, Verstärkungsfasern aufweisenden Kunststoffmaterial, welches schließlich die zweite Komponente 6 des Kunststoffverbundes bildet, in ein Presswerkzeug eingelegt und mit den Trägerelement 4 und dem Kunststoffmaterial zusammengepresst.

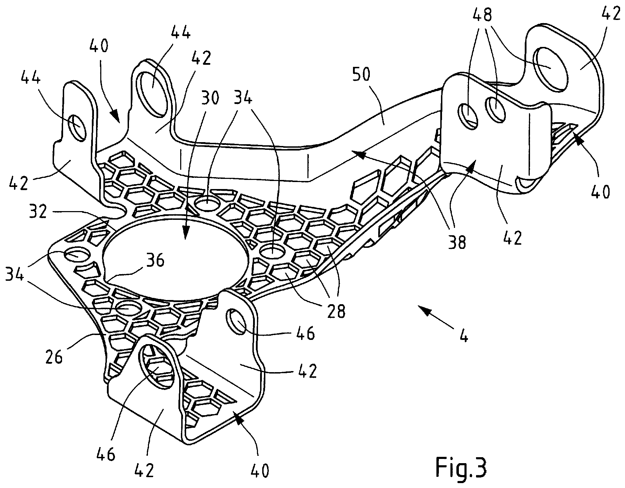

Das Trägerelement 4 ist insbesondere in Fig. 3 dargestellt. Es besteht aus einem umgeformten und gelochten Metallblech, vorzugsweise Stahlblech. Das Metallblech (Stahlblech) hat eine Blechdicke im Bereich von ca. 1 bis 3,5 mm. Die Streckgrenze des zur Herstellung des Trägerelements 4 verwendeten Metallblechs liegt beispielsweise im Bereich von ca. 300 bis 400 MPa (N/mm²).

Das Trägerelement 4 hat eine im Wesentlichen flache oder geringfügig gebogene Basis oder Grundfläche 26, an der einseitig Laschen 42 und mindestens ein Steg 50 abstehen. Die Basis oder Grundfläche 26 ist mit einer Vielzahl von Durchbrechungen 28 versehen, wobei eine Mehrzahl dieser Durchbrechungen 28 eine sechseckige Lochform aufweist. Der sich aus der Summe der Durchbrechungen 28 resultierende Lochflächenanteil beträgt beispielweise ca. 60 bis 80 % der Grundfläche 26 des metallischen Trägerelements 4.

Durch die Durchbrechungen 28 des Trägerelements verbinden sich die Kunststoffharze der beiden Komponenten 2 und 6 miteinander und härten nach dem Fließpressen stoffschlüssig aus. Zudem verbinden sich die beiden miteinander stoffschlüssig verbundenen faserverstärkten Komponenten 2 und 6 nach dem Aushärten formschlüssig mit dem gelochten metallischen Trägerelement 4.

Des Weiteren weist das Trägerelement 4 eine Radlageraufnahme 30 auf, die eine Aussparung 32 mit relativ großem Durchmesser und zum Beispiel vier kleinere Durchgangslöcher 34 umfasst. Die Durchgangslöcher 34 sind voneinander beabstandet auf einem gemeinsamen Teilkreis angeordnet, der die Aussparung 32 umgibt. Die im Wesentlichen kreisrunde Aussparung 32 ist mit einer nasenförmigen Einbuchtung 36 versehen.

Die einseitig von der Grundfläche 26 abstehenden Laschen 42 bzw. Stege 50 definieren eine dreidimensionale Struktur 38 des Trägerelements 4. Die Laschen 42 bilden paarweise gabelförmige Anbindungsabschnitte 40 zur Verbindung des Fahrwerksteils 1 mit Fahrwerkslenkern, beispielsweise Querlenkern, bzw. einer Spurstange. Hierzu sind in den Laschen 42 Durchgangslöcher 44, 46 und 48 zur Aufnahme von Schrauben oder Gelenkbolzen ausgebildet. Die Durchgangslöcher 44 dienen beispielsweise der Anbindung des Fahrwerksteils 1 an einen oberen Querlenker, während die Durchgangslöcher 46 der Anbindung des Fahrwerksteils 1 an einen hinteren, unteren Querlenker dienen. Die Durchgangslöcher 48 können zur Anbindung des Fahrwerksteils 1 an einen vorderen, unteren Querlenker bzw. an eine Spurstange verwendet werden.

Die Laschen 42 sind im Wesentlichen senkrecht zu der Grundfläche 26 des Trägerelements 4 abgekantet, wobei der ebenfalls im Wesentlichen senkrecht zur Grundfläche 26 abgekantete Steg (Wandabschnitt) 50 zwei der Laschen 42 einstückig miteinander verbindet.

Die erste Komponente 2 des faserverstärkten Kunststoffverbundes weist eine größere längliche Erstreckung als das Trägerelement 4 und auch als die zweite Komponente 6 auf. Die gegenüber dem Trägerelement 4 bzw. der zweiten Komponente 6 zusätzliche Länge der ersten Komponente 2 ist im Wesentlichen durch einen L-förmigen Abschnitt der ersten Komponente 2 gebildet, der einen Arm 8 des Fahrwerksteils 1 definiert, wobei auf einer Seite, beispielsweise der Oberseite oder Innenseite des Arms 8 vorzugsweise ein verstärkter Bereich 10 ausgebildet ist. Der verstärkte Bereich 10 dient dazu, den aus der ersten Komponente 2 gebildeten Arm 8 derart zu verstärken, dass der Arm 8 eine ausreichende Steifigkeit und Festigkeit zur Aufnahme der auf den Arm 8 wirkenden Kräfte hat.

Der L-förmige Arm 8 hat einen ersten, kurvenförmigen Armabschnitt 7 und einen zweiten Armabschnitt 9, wobei am Ende des kurvenförmigen Armabschnitts 7 ein Lagerauge 12 angeordnet ist, das beispielsweise der gelenkigen Anbindung des Fahrwerksteils 1 an einen Achsträger dient. Das Lagerauge 12 ist vorzugsweise im Wesentlichen kreisrund oder kreiszylindrisch ausgeführt und weist beidseits axial vorstehende Kragen auf. Der erste Armabschnitt 7 ist im Wesentlichen plattenförmig ausgebildet. Des Weiteren weist der zweite Armabschnitt 9 eine Aussparung 14 auf, die das Gewicht des Fahrwerksteils 1 verringert und beispielsweise der Durchleitung einer Bremsleitung dienen kann. Die Aussparung 14 ist im Wesentlichen ellipsenförmig ausgebildet.

Die erste Komponente 2 des Kunststoffverbundes weist eine im Wesentlichen plane Fläche 16 auf, welche mit einem Radlageraufnahmebereich 18 versehen ist. Der Radlageraufnahmebereich 18 umfasst eine im Wesentlichen kreisrunde Aussparung 20 und vier um die Aussparung 20 verteilt angeordnete Durchgangslöcher 22. Die Größe, Form und Anordnung der Aussparung 20 und der Durchgangslöcher 22 der Komponente 2 entsprechen der Größe, Form und Anordnung der Aussparung 32 und Durchgangslöcher 34 des metallischen Trägerelements 4, so dass die Aussparungen 20 und 32 sowie die Durchgangslöcher 22 und 34 fluchtend in Überdeckung liegen.

Des Weiteren weist die Fläche 16 zwei zusätzliche Durchgangslöcher 24 auf. Diese können dazu genutzt werden, an dem Fährwerksteil 1 weitere Komponenten, wie beispielsweise ein Bremsblech, zu montieren. Die erste Komponente 2 des Kunststoffverbundes ist beispielsweise derart geformt, dass ihr Radlageraufnahmeabschnitt 18 in einer anderen Ebene liegt als ihr kurvenförmiger, das Lagerauge 12 aufweisende Armabschnitt 7, wobei diese beiden Abschnitte durch den zweiten Armabschnitt 9 einstückig miteinander verbunden sind.

Die durch Fließenpressen erzeugte zweite Komponente 6 des Kunststoffverbundes bedeckt das metallische Trägerelement 4 und den Radlageraufnahmeabschnitt 18 der ersten Komponente 2 des Kunststoffverbundes. Die Umfangskanten der beiden Komponenten 2 und 6 verlaufen teilweise konturparallel und im Wesentlichen kantenbündig, wobei die zweite Komponente 6 an der Aussparung 14 des Armabschnitts 9 der ersten Komponente 2 endet.

An der zweiten Komponente 6 des faserverstärkten Kunststoffverbundes ist ebenfalls ein Radlageraufnahmebereich ausgebildet. Der Radlageraufnahmebereich 52 der zweiten Komponente 6 umfasst, ähnlich wie der Radlageraufnahmebereich 18 der ersten Komponente, eine im Wesentlichen kreisrunde Aussparung 54 und vier um die Aussparung 54 verteilt angeordnete Durchgangslöcher 56. Die Größe, Form und Anordnung der Aussparung 54 und der Durchgangslöcher 56 entsprechen wiederum der Größe, Form und Anordnung der Aussparung 32 und Durchgangslöcher 34 des metallischen Trägerelements 4, so dass die Aussparungen 54, 32 und 20 sowie die Durchgangslöcher 56, 34 und 22 fluchtend in Überdeckung liegen.

Die zweite Komponente 6 des Kunststoffverbundes ummantelt die Laschen 42 des metallischen Trägerelements 4 sowie den die Laschen 42 verbindenden Steg 50. Die durch Fließpressen erzeugte zweite Komponente 6 des Kunststoffverbundes hat somit eine dreidimensionale Struktur, die aus einer im Wesentlichen flachen Grundfläche und davon abstehenden Stegen 58 gebildet ist, wobei jeweils zwei Stege 58 einen Anbindungsabschnitt 60 zur Verbindung des Fahrwerksteils 1 mit Fahrwerkslenkern, beispielsweise Querlenkern, bzw. einer Spurstange definieren. Hierzu sind in den Stegen 58 Durchgangslöcher 62, 64 und 66 vorgesehen, die mit den Durchgangslöchern 44, 46 und 48 des Trägerelements 4 fluchten.

Die die Durchgangslöcher 62, 64 und 66 aufweisenden Stege 58 sind durch Wandabschnitte 68 miteinander verbunden, wobei die Wandabschnitte 68 rundstabförmige, senkrecht zur Grundfläche der zweiten Komponente 6 verlaufende Verdickungen 70 aufweisen. Diese Verdickungen 70 bewirken eine Stabilisation der Wandabschnitte 68 und damit des Fahrwerksteils 1. Außerdem sind in der zweiten Komponente 6 Durchgangslöcher 72 ausgebildet, die mit den in der ersten Komponente 2 ausgebildeten Durchgangslöchern 24 fluchten.

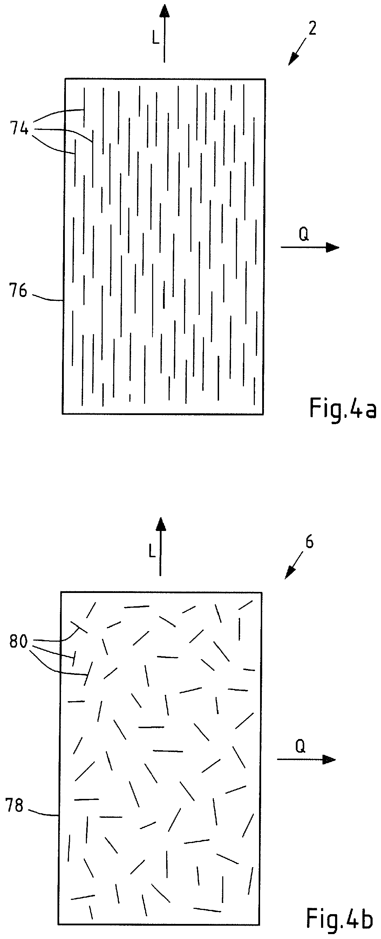

In Fig. 4a ist eine Schnittebene eines Abschnitts der ersten Komponente 2 des Kunststoffverbundes schematisch dargestellt. Die Schnittebene verläuft im Wesentlichen oberflächenparallel zur Grundfläche 16 der ersten Komponente 2. Dabei weist die erste Komponente 2 ausschließlich im Wesentlichen unidirektional angeordnete Endlosfasern 74 auf. Diese sind in einer dargestellten Schicht 76 der ersten Komponente 2 in Längsrichtung L des Fahrwerksteils 1 orientiert. Mit Q ist die Querrichtung bezeichnet. Aus Fig. 4a ist ersichtlich, dass sich die Endlosfasern 74 nicht über die ganze Länge des gezeigten Abschnitts der ersten Komponente 2 erstrecken und auch nicht alle dieselbe Länge aufweisen, sondern dass alle Endlosfasern 74 eine gewisse Mindestlänge aufweisen.

Fig. 4b zeigt schematisch eine Schicht 78 bzw. Schnittebene eines Abschnitts der zweiten Komponente 6 des Kunststoffverbunds. Die Schnittebene verläuft ebenfalls oberflächenparallel zu dem gezeigten Flächenabschnitt der zweiten Komponente 2. Die Schicht 78 weist diskontinuierliche Fasern 80 auf, die im Vergleich zu den Endlosfasern 74 der ersten Komponente 2 eine deutlich geringere Länge aufweisen. Vorzugsweise weisen die diskontinuierlichen Fasern 80 keine gemeinsame Orientierungsrichtung auf, sondern sind zufällig in der Schicht 78 verteilt.

Vorzugsweise ist die erste Komponente 2 des faserverstärkten Kunststoffverbundes aus mehreren Schichten, beispielsweise aus 9 bis 13 Schichten, bevorzugt aus 10 bis 12 Schichten, und besonders bevorzugt aus 11 Schichten 76 unidirektionaler Endlosfasern 74 aufgebaut. Die Endlosfasern 74 machen dabei einen Anteil von beispielsweise ca. 43 bis 63 Vol.-%, bevorzugt von 48 bis 58 Vol.-%, der ersten Komponente 2 aus.

## Patentansprüche

1. Fahrwerksteil eines Kraftfahrzeugs, insbesondere Radträger, umfassend einen faserverstärkten Kunststoffverbund mit einem metallischen Trägerelement (4), wobei das Trägerelement (4) aus einem eine Vielzahl von Durchbrechungen (28) aufweisenden Metallblech gebildet ist, **dadurch gekennzeichnet,**
**dass** sich der faserverstärkte Kunststoffverbund aus zumindest zwei unterschiedlichen Komponenten (2, 6) zusammensetzt,
wobei eine erste Komponente (2) des Kunststoffverbundes an einer ersten Seite des Trägerelements (4) angeordnet ist und wobei eine zweite Komponente (6) des Kunststoffverbundes an einer der ersten Seite gegenüberliegenden Seite des Trägerelements (4) angeordnet ist,
wobei die erste Komponente (2) aus faserverstärktem Kunststoff mit Endlosfasern (74) ausgebildet ist, wobei die Länge der Endlosfasern (74) über einer Mindestlänge von 50 mm liegt,
wobei die zweite Komponente (6) aus faserverstärktem Kunststoff mit diskontinuierlichen Fasern (80) ausgebildet ist,
wobei die Länge der diskontinuierlichen Fasern (80) geringer ist als die Länge der Endlosfasern (74), wobei das Trägerelement (4) aus einem umgeformten Metallblech gebildet ist,
wobei eine erste Seite des Trägerelements (4) im Wesentlichen zweidimensional ausgebildet ist, wobei die der ersten Seite gegenüberliegende Seite des Trägerelements (4) eine dreidimensionale Struktur (38) aufweist, und
wobei das Trägerelement (4) einen durch die Durchbrechungen (28) gebildeten Lochflächenanteil aufweist, der 60 bis 90% der Grundfläche (26) des Trägerelements (4) beträgt.

2. Fahrwerksteil nach Anspruch 1,
**dadurch gekennzeichnet, dass** die Endlosfasern (74) als unidirektionale und kontinuierliche Endlosfasern ausgebildet sind, wobei die Endlosfasern (74) bevorzugt in Längsrichtung (L) des Fahrwerksteils verlaufen.

3. Fahrwerksteil nach Anspruch 2,
**dadurch gekennzeichnet, dass** die erste Komponente (2) eine Dicke im Bereich von 0,1 bis 0,3 mm, bevorzugt im Bereich von 0,15 bis 0,25 mm, aufweist, und dass sich die erste Komponente (2) aus 9 bis 13 Schichten (76), bevorzugt aus 10 bis 12 Schichten (76), besonders bevorzugt aus 11 Schichten (76), unidirektionaler und kontinuierlicher Endlosfasern (74) zusammensetzt.

4. Fahrwerksteil nach Anspruch 1,
**dadurch gekennzeichnet, dass** die Endlosfasern (74) als bidirektionale und kontinuierliche Endlosfasern ausgebildet sind, wobei die Endlosfasern (74) vorzugsweise im Wesentlichen orthogonal zueinander ausgerichtet sind und bevorzugt in Längsrichtung (L) und in Querrichtung (Q) des Fahrwerksteils verlaufen.

5. Fahrwerksteil nach Anspruch 4,
**dadurch gekennzeichnet, dass** die erste Komponente (2) eine Dicke im Bereich von 0,2 bis 0,6 mm, bevorzugt im Bereich von 0,3 bis 0,5 mm, aufweist, und dass sich die erste Komponente (2) aus 6 bis 10 Schichten (76), bevorzugt aus 7 bis 9 Schichten (76), besonders bevorzugt aus 8 Schichten (76), bidirektionaler und kontinuierlicher Endlosfasern (74) zusammensetzt.

6. Fahrwerksteil nach einem der Ansprüche 1 bis 5,
**dadurch gekennzeichnet, dass** die Endlosfasern (74) einen Anteil von 43 bis 63 Vol.-%, bevorzugt von 48 bis 58 Vol.-%, der ersten Komponente (2) ausmachen.

7. Fahrwerksteil nach einem der Ansprüche 1 bis 6,
**dadurch gekennzeichnet, dass** die zweite Komponente (6) isotrope Eigenschaften aufweist.

8. Fahrwerksteil nach einem der Ansprüche 1 bis 7,
**dadurch gekennzeichnet, dass** die diskontinuierlichen Fasern (80) einen Anteil von 30 bis 50 Vol.-%, bevorzugt von 35 bis 45 Vol.-%, der zweiten Komponente (6) ausmachen.

9. Fahrwerksteil nach einem der Ansprüche 1 bis 8,
**dadurch gekennzeichnet, dass** die erste Komponente (2) und die zweite Komponente (6) des Kunststoffverbundes über die Durchbrechungen (28) des Trägerelements (4) stoffschlüssig miteinander verbunden sind, und dass der Kunststoffverbund formschlüssig mit dem Trägerelement (4) verbunden ist.

10. Fahrwerksteil nach einem der Ansprüche 1 bis 9,
**dadurch gekennzeichnet, dass** die erste Komponente (2) und die zweite Komponente (6) aus wärmehärtbarem Kunstharz,
vorzugsweise aus Polyesterharz, Epoxidharz, Phenolharz, Polyurethanharz und/oder Methylmethacrylatharz,
und/oder aus thermoplastischem Kunststoff,
vorzugsweise aus Polyamid, Polyphenylensulfid, Polybutylenterephthalat, Polyethylenterephthalat und/oder Polyetheretherketon, gebildet sind, wobei die erste Komponente (2) bevorzugt Epoxidharz aufweist und wobei die zweite Komponente (6) bevorzugt Vinylesterharz aufweist.

11. Fahrwerksteil nach einem der Ansprüche 1 bis 10,
**dadurch gekennzeichnet, dass** das Trägerelement (4) einen durch die Durchbrechungen (28) gebildeten Lochflächenanteil aufweist, der 70 bis 80 % der Grundfläche (26) des Trägerelements (4) beträgt.

12. Fahrwerksteil nach einem der Ansprüche 1 bis 11,
**dadurch gekennzeichnet, dass** die Durchbrechungen (28) eine sechseckige oder kreisförmige Lochform aufweisen, und dass die Lochflächengröße der jeweiligen Durchbrechung (28) in einem Bereich von 100 bis 250 mm², bevorzugt in einem Bereich von 150 bis 200 mm², besonders bevorzugt in einem Bereich von 170 bis 180 mm², liegt.

13. Fahrwerksteil nach einem der Ansprüche 1 bis 12,
**dadurch gekennzeichnet, dass** das Metallblech des Trägerelements (4) eine Dicke im Bereich von 1 bis 4 mm, bevorzugt im Bereich von 2 bis 3,5 mm, aufweist, und dass das Metallblech eine Streckgrenze in einem Bereich von 100 bis 500 N/mm², bevorzugt in einem Bereich von 200 bis 400 N/mm², aufweist.

14. Verfahren zur Herstellung eines Fahrwerksteils, insbesondere eines Radträgers, nach einem der Ansprüche 1 bis 13,
bei dem ein metallisches Trägerelement in einem Umformschritt umgeformt wird,
bei dem das metallische Trägerelement vor oder nach dem Umformschritt in mindestens einem Stanzschritt mit einer Vielzahl von Durchbrechungen versehen wird, und
bei dem eine erste Faserverbundwerkstoffkomponente mit einer zweiten Faserverbundwerkstoffkomponente in einem Fließpressschritt über die Durchbrechungen stoffschlüssig verbunden wird.

## Claims

1. Chassis part of a motor vehicle, in particular a wheel carrier, comprising a fibre-reinforced plastic composite with a metallic carrier element (4), the carrier element (4) being formed from a metal sheet having a plurality of openings (28),
**characterised in that**
the fibre-reinforced plastic composite is composed of at least two different components (2, 6),
wherein a first component (2) of the plastic composite is arranged on a first side of the carrier element (4) and wherein a second component (6) of the plastic composite is arranged on a side of the carrier element (4) opposite the first side, wherein the first component (2) is formed of fibre-reinforced plastic with continuous fibres (74), wherein the length of the continuous fibres (74) is greater than a minimum length of 50 mm,
wherein the second component (6) is formed of fibre-reinforced plastic with discontinuous fibres (80),
wherein the length of the discontinuous fibres (80) is shorter than the length of the continuous fibres (74), wherein the carrier element (4) is formed of a formed metal sheet,
wherein a first side of the carrier element (4) is substantially two-dimensional, wherein the side of the carrier element (4) opposite the first side has a three-dimensional structure (38), and
wherein the carrier element (4) has a percentage of perforated area formed by the openings (28), which is 60 to 90% of the base area (26) of the carrier element (4).

2. Chassis part according to claim 1,
**characterised in that** the continuous filaments (74) are formed as unidirectional and continuous filaments, the continuous filaments (74) preferably extending in the longitudinal direction (L) of the chassis part.

3. Chassis part according to claim 2,
**characterised in that** the first component (2) has a thickness in the range of 0.1 to 0.3 mm, preferably in the range of 0.15 to 0.25 mm, and **in that** the first component (2) is composed of 9 to 13 layers (76), preferably 10 to 12 layers (76), particularly preferably 11 layers (76), of unidirectional and continuous filaments (74).

4. Chassis part according to claim 1,
**characterised in that** the continuous filaments (74) are formed as bidirectional and continuous filaments, the continuous filaments (74) preferably being oriented substantially orthogonally to one another and preferably extending in the longitudinal direction (L) and in the transverse direction (Q) of the chassis part.

5. Chassis part according to claim 4,
**characterised in that** the first component (2) has a thickness in the range of 0.2 to 0.6 mm, preferably in the range of 0.3 to 0.5 mm, and that the first component (2) is composed of 6 to 10 layers (76), preferably of 7 to 9 layers (76), particularly preferably of 8 layers (76), bidirectional and continuous filaments (74).

6. Chassis part according to one of claims 1 to 5,
**characterised in that** the continuous filaments (74) constitute a proportion of 43 to 63% by volume, preferably of 48 to 58% by volume, of the first component (2).

7. Chassis part according to one of claims 1 to 6,
**characterised in that** the second component (6) has isotropic properties.

8. Chassis part according to any of claims 1 to 7,
**characterised in that** the discontinuous fibres (80) constitute a proportion of 30 to 50% by volume, preferably of 35 to 45% by volume, of the second component (6).

9. Chassis part according to one of claims 1 to 8,
**characterised in that** the first component (2) and the second component (6) of the plastic composite are connected to one another in an integrally bonded manner via the openings (28) in the carrier element (4), and **in that** the plastic composite is connected to the carrier element (4) in a form-fitting manner.

10. Chassis part according to one of claims 1 to 9,
**characterised in that** the first component (2) and the second component (6) are made of thermosetting synthetic resin,
preferably made of polyester resin, epoxy resin, phenolic resin, polyurethane resin and/or methyl methacrylate resin
and/or made of thermoplastic material,
preferably formed from polyamide, polyphenylene sulfide, polybutylene terephthalate, polyethylene terephthalate and/or polyether ether ketone, wherein the first component (2) preferably comprises epoxy resin and wherein the second component (6) preferably comprises vinyl ester resin.

11. Chassis part according to any of claims 1 to 10,
**characterised in that** the carrier element (4) has a percentage of perforated area formed by the openings (28), which is 70 to 80% of the base area (26) of the carrier element (4).

12. Chassis part according to one of claims 1 to 11,
**characterised in that** the openings (28) have a hexagonal or circular hole shape, and **in that** the hole area size of the respective opening (28) is in a range from 100 to 250 mm², preferably in a range from 150 to 200 mm², particularly preferably in a range from 170 to 180 mm².

13. Chassis part according to one of claims 1 to 12,
**characterised in that** the metal sheet of the carrier element (4) has a thickness in the range of 1 to 4 mm, preferably in the range of 2 to 3.5 mm, and **in that** the metal sheet has a yield strength in a range from 100 to 500 N/mm², preferably in a range from 200 to 400 N/mm².

14. Method for producing a chassis part, in particular a wheel carrier, according to one of claims 1 to 13,
in which a metallic carrier element is formed in a forming step,
in which the metallic carrier element is provided with a plurality of openings in at least one punching step before or after the forming step, and
in which a first fibre composite component is integrally bonded to a second fibre composite component in an impact extrusion step via the openings.

## Revendications

1. Partie de suspension d'un véhicule automobile, notamment un support de roue, comportant un composite en matière plastique renforcé par des fibres muni d'un élément de support métallique (4), l'élément de support (4) étant formé par une tôle métallique présentant une multitude de perforations (28), **caractérisée, en ce que** le composite en matière plastique renforcé par des fibres se compose d'au moins deux composants différents (2, 6),
un premier composant (2) du composite en matière plastique étant agencé sur un premier côté de l'élément de support (4) et un deuxième composant (6) du composite en matière plastique étant agencé sur un côté de l'élément de support (4) opposé au premier côté,
le premier composant (2) étant conçu en matière plastique renforcé par des fibres avec des fibres sans fin (74), la longueur des fibres sans fin (74) ayant une longueur minimale de 50 mm,
le deuxième composant (6) étant conçu en matière plastique renforcé par des fibres avec des fibres discontinues (80),
la longueur des fibres discontinues (80) étant inférieure à la longueur des fibres sans fin (74), l'élément de support (4) étant formé à partir d'une tôle métallique déformée, un premier côté de l'élément de support (4) étant conçu essentiellement bidimensionnel, le côté de l'élément de support (4) opposé au premier côté présentant une structure tridimensionnelle (38), et l'élément de support (4) présentant un pourcentage surfacique de perforation formé par les perforations (28) compris entre 60 et 90 % de la surface de base (26) de l'élément de support (4).

2. Partie de suspension selon la revendication 1,
**caractérisée en ce que** les fibres sans fin (74) sont conçues en tant que fibres sans fin unidirectionnelles et continues, les fibres sans fin (74) passant, de préférence, en direction longitudinale (L) de la partie de suspension.

3. Partie de suspension selon la revendication 2,
**caractérisée en ce que** le premier composant (2) présente une épaisseur comprise entre 0,1 et 0,3 mm, de préférence entre 0,15 et 0,25 mm, et **en ce que** le premier composant (2) se compose de 9 à 13 couches (76), de préférence de 10 à 12 couches (76), de façon particulièrement préférée de 11 couches (76) de fibres sans fin (74) unidirectionnelles et continues.

4. Partie de suspension selon la revendication 1,
**caractérisée en ce que** les fibres sans fin (74) sont conçues en tant que fibres sans fin bidirectionnelles et continues, les fibres sans fin (74) étant orientées, de préférence, essentiellement orthogonalement l'une à l'autre et, de préférence, passant en direction longitudinale (L) et en direction transversale (Q) de la partie de suspension.

5. Partie de suspension selon la revendication 4,
**caractérisée en ce que** le premier composant (2) présente une épaisseur comprise entre 0,2 et 0,6 mm, de préférence entre 0,3 à 0,5 mm, et **en ce que** le premier composant (2) se compose de 6 à 10 couches (76), de préférence de 7 à 9 couches (76), de façon particulièrement préférée de 8 couches (76) de fibres sans fin (74) bidirectionnelles et continues.

6. Partie de suspension selon l'une des revendications 1 à 5,
**caractérisée en ce que** les fibres sans fin (74) représentent une part comprise entre 43 et 63 % en volume, de préférence entre 48 et 58 % en volume, du premier composant (2).

7. Partie de suspension selon l'une des revendications 1 à 6,
**caractérisée en ce que** le deuxième composant (6) présente des propriétés isotropes.

8. Partie de suspension selon l'une des revendications 1 à 7,
**caractérisée en ce que** les fibres discontinues (80) représentent une part comprise entre 30 et 50 % en volume, de préférence entre 35 et 45 % en volume, du deuxième composant (6).

9. Partie de suspension selon l'une des revendications 1 à 8,
**caractérisée en ce que** le premier composant (2) et le deuxième composant (6) du composite en matière plastique sont mutuellement reliés, par liaison de matière, au moyen des perforations (28) de l'élément de support (4), et **en ce que** le composite en matière plastique est relié, par liaison de forme, à l'élément de support (4).

10. Partie de suspension selon l'une des revendications 1 à 9,
**caractérisée en ce que** le premier composant (2) et le deuxième composant (6) sont formés à base d'une résine thermodurcissable,
de préférence de résine polyester, de résine époxy, de résine phénolique, de résine polyuréthane et/ou de résine de méthacrylate de méthyle,
et/ou d'une matière synthétique thermoplastique,
de préférence à base de polyamide, de polysulfure de phénylène, de téréphtalate de polybutylène, et/ou de polyétheréthercétone,
le premier composant (2) présentant de préférence de la résine époxy et le deuxième composant (6) présentant, de préférence, de la résine d'ester vinylique.

11. Partie de suspension selon l'une des revendications 1 à 10,
**caractérisée en ce que** l'élément de support (4) présente un pourcentage surfacique de perforation formé par les perforations (28) compris entre 70 et 80 % de la surface de base (26) de l'élément de support (4).

12. Partie de suspension selon l'une des revendications 1 à 11,
**caractérisée en ce que** les perforations (28) présentent une forme de trou hexagonale ou circulaire, et **en ce que** la dimension de trou de perforation respective (28) est comprise entre 100 et 250 mm², de préférence entre 150 et 200 mm², de façon particulièrement préférée entre 170 et 180 mm².

13. Partie de suspension selon l'une des revendications 1 à 12,
**caractérisée en ce que** la tôle métallique de l'élément de support (4) présente une épaisseur comprise entre 1 et 4 mm, de préférence entre 2 et 3,5 mm, et **en ce que** la tôle métallique présente une limite d'élasticité comprise entre 100 et 500 N/mm², de préférence entre 200 et 400 N/mm².

14. Procédé de fabrication d'une partie de suspension, notamment d'un support de roue, selon l'une des revendications 1 à 13,
dans lequel un élément de support métallique est transformé dans une étape de formage, dans lequel l'élément de support métallique, avant ou après l'étape de formage, est pourvu d'une multitude de perforations dans au moins une étape de poinçonnage, et dans lequel un premier composant de matériau composite à base de fibres est relié, par liaison de matière, à un deuxième composant de matériau composite à base de fibres dans une étape d'extrusion d'impact au moyen des perforations.
